# EUROPÄISCHE PATENTANMELDUNG

(11) **EP 0 901 014 A1**
(43) Veröffentlichungstag der Anmeldung: **10.03.1999**
(21) Anmeldenummer: 98116945.1
(22) Anmeldetag: 08.09.1998
(51) Int. Cl.: G01N 27/49

(54) **Elektrische Schaltung für einen elektrochemischen Sensor**

(30) Priorität: 08.09.1997 DE 19739317
(71) Anmelder: ENDRESS + HAUSER CONDUCTA GESELLSCHAFT FÜR MESS UND REGELTECHNIK mbH & Co., 70839 Gerlingen (DE)
(72) Erfinder: Horn, Michael, Dr., 85521 Ottobrunn (DE); Tränkler, Hans-Rolf, Prof., 82031 Grünwald (DE); Makadmini, Lothfi, Dr., 83355 Grabenstätt (DE)
(74) Vertreter: Dreiss, Fuhlendorf, Steimle & Becker

(57) **Zusammenfassung**

Es wird eine elektrische Schaltung (1) für einen elektrochemischen Sensor (2), insbesondere für einen amperometrischen Gassensor beschrieben. Der Sensor (2) ist mit einer Meßelektrode (S), einer Referenzelektrode (R) und einer Gegenelektrode (C) versehen, wobei die Gegenelektrode (C) insbesondere zur Stabilisierung des Potentials der Meßelektrode (S) von einem Potentiostaten (6) beaufschlagt ist. Ein Eingang (16) des Potentiostaten (6) ist mit der Meßelektrode (S) gekoppelt. Damit kann der Arbeitspunkt des Sensors (2) konstant gehalten werden.

## Beschreibung

Die Erfindung betrifft eine elektrische Schaltung für einen elektrochemischen Sensor, insbesondere für einen amperometrischen Gassensor, der mit einer Meßelektrode, einer Referenzelektrode und einer Gegenelektrode versehen ist, wobei die Gegenelektrode insbesondere zur Stabilisierung des Potentials der Meßelektrode von einem Potentiostaten beaufschlagt ist.

Eine derartige elektrische Schaltung ist unter anderem aus dar Veröffentlichung "Elektrochemische Gassensoren - Wirkungsweisen und Möglichkeiten zur Funktionsüberwachung" von Dieter Kitzelmann und Carsten Gottschalk in der Zeitschrift tm - Technisches Messen, Jahrgang 1995, Heft 4, Seiten 152 bis 159 bekannt.

Dort ist ein elektrochemischer Sensor beschrieben, mit dem die Konzentration eines Gases in der Luft nachgewiesen werden kann. Bei dem Sensor handelt es sich um einen amperometrischen Gassensor, bei dem durch das nachzuweisende Gas eine elektrochemische Reaktion ausgelöst und damit ein Elektronenstrom erzeugt wird. Der Sensor weist unter anderem eine Gegenelektrode und eine Meßelektrode auf, zu der der erzeugte Elektronenstrom fließt. Der Elektronenstrom ist etwa proportional zur Konzentration des zu messenden Gases. Zur Auswertung des Elektronenstroms sind üblicherweise ein mit der Meßelektrode verbundener und auf Masse liegender Lastwiderstand sowie eine zugehörige Auswerteschaltung vorgesehen.

Des weiteren ist der Sensor mit einer Referenzelektrode versehen, die der Stabilisierung des Potentials der Meßelektrode dient. Zu diesem Zweck ist ein sogenannter Potentiostat vorgesehen, der mit seinem Eingang mit der Referenzelektrode verbunden ist, und der über seinen Ausgang die Gegenelektrode beaufschlagt. Ein weiterer Eingang des Potentiostaten ist mit einem auf Masse liegenden Spannungsteiler verbunden, über den eine Sollspannung eingestellt werden kann. Die Sollspannung ist abhängig von dem zu messenden Gas und kann beispielsweise bei Kohlenmonoxid auch Null sein.

Der Potentiostat beeinflußt die Gegenelektrode derart, daß die Spannung an der Referenzelektrode der Sollspannung entspricht und damit konstant ist. Dies hat zur Folge, daß auch die Spannung an der Meßelektrode etwa konstant ist.

Die Spannungsdifferenz an den beiden Eingängen des Potentiostaten ist etwa Null. Daraus ergibt sich, daß die Sollspannung etwa gleich ist der Summe aus der Spannung zwischen der Referenzelektrode und der Meßelektrode und dem Spannungsabfall an dem Lastwiderstand. Eine Veränderung des Elektronenstroms und damit des Spannungsabfalls am Lastwiderstand hat somit eine Veränderung der Spannungsverhältnisse am Potentiostaten zur Folge. Das von dem Potentiostaten an der Referenzelektrode eingestellte Potential ist somit abhängig von dem Elektronenstrom und damit von der Konzentration des zu messenden Gases. Dies stellt eine Rückkopplung dar, deren Grad beispielsweise durch eine entsprechende Wahl des Lastwiderstands beeinflußt werden kann.

Dabei hat sich herausgestellt, daß ein größerer Lastwiderstand einerseits ein geringeres Stromrauschen, andererseits jedoch ein Überschwingen und/oder ein langsameres Einschwingen des erzeugten Elektronenstroms bei Konzentrationssprüngen des zu messenden Gases zur Folge hat. Ein kleinerer Lastwiderstand hingegen bewirkt ein stärkeres Stromrauschen mit einhergehenden kleineren Werten des erzeugten Elektronenstroms, was die Verwendung von hochwertigen und damit teuren Bauelementen erforderlich macht.

Aufgabe der Erfindung ist es, eine elektrische Schaltung für einen elektrochemischen Sensor zu schaffen, die insbesondere im Hinblick auf das Stromrauschen und das Ein- bzw. Überschwingen des erzeugten Elektronenestroms verbessert ist.

Diese Aufgabe wird bei einer elektrischen Schaltung der eingangs genannten Art erfindungsgemäß dadurch gelöst, daß ein Eingang des Potentiostaten mit der Meßelektrode gekoppelt ist.

Im Unterschied zu der bekannten elektrischen Schaltung, bei der der Potentiostat über den Spannungsteiler auf Masse liegt, ist bei der erfindungsgemäßen elektrischen Schaltung der Potentiostat mit der Meßelektrode gekoppelt. Während der auf Masse liegende Potentiostat bei der bekannten elektrischen Schaltung die erläuterte Abhängigkeit des Potentiostaten von dem Spannungsabfall am Lastwiderstand zur Folge hat, bewirkt die unmittelbare Kopplung des Potentiostaten mit der Meßelektrode bei der erfindungsgemäßen elektrischen Schaltung, daß das von dem Potentiostaten an der Referenzelektrode eingestellte Potential nicht mehr abhängig ist von dem über den Lastwiderstand fließenden Elektronenstrom.

Bei der erfindungsgemäßen elektrischen Schaltung hat also eine Veränderung des Elektronenstroms keinen Einfluß auf den Potentiostaten. Eine Rückkopplung des Elektronenstroms auf den Potentiostaten ist nicht vorhanden.

Dies bringt die Vorteile mit sich, daß ein Überschwingen des Elektronenstroms bei einem Konzentrationssprung des zu messenden Gases im wesentlichen unterbleibt. Des weiteren verringert sich die Einschwingzeit des Elektronenstroms nach einem derartigen Konzentrationssprung auch bei einem in weiten Bereichen frei wählbaren Lastwiderstand wesentlich. Entsprechendes gilt für das Stromrauschen, das durch diesen Lastwiderstand ebenfalls wesentlich verringert werden kann. Dabei ist es sogar möglich, daß bei der Auswerteschaltung die Filterschaltung weggelassen werden kann.

Ein weiterer Vorteil besteht darin, daß der erzeugte Elektronenstrom aufgrund des nunmehr relativ frei und damit auch relativ groß wählbaren Lastwiderstands ein wesentlich verbessertes Signal/Rausch-Verhältnis zur Folge hat. Dies wiederum erlaubt es, daß bei der erfindungsgemäßen elektrischen Schaltung nicht zwingend hochwertige und damit teure Bauelemente verwendet werden müssen. Damit wird das Preis-Leistungs-Verhältnis der erfindungsgemäßen Schaltung wesentlich verbessert.

Bei einer vorteilhaften Ausgestaltung der Erfindung ist die Meßelektrode über einen Verstärker, insbesondere über einen Spannungsfolger, mit dem Eingang des Potentiostaten gekoppelt. Durch den Verstärker wird gewährleistet, daß die an der Meßelektrode abgegriffene Spannung stabil und ohne Rückwirkungen auf die Meßelektrode von dem Potentiostaten weiterverarbeitet werden kann.

Besonders zweckmäßig ist es, wenn der mit der Meßelektrode gekoppelte Eingang des Potentiostaten mit Mitteln zum Einstellen einer Sollspannung, beispielsweise mit einem Spannungsteiler, gekoppelt ist. Die Sollspannung wird also zwischen der Meßelektrode und dem Potentiostaten zur Verfügung gestellt. Dies stellt eine einfache, aber effektive Möglichkeit dar, die Sollspannung in der erfindungsgemäßen elektrischen Schaltung zu realisieren.

Bei einer vorteilhaften Weiterbildung der Erfindung ist die Meßelektrode über den Verstärker und die Mittel zum Einstellen einer Sollspannung mit dem Potentiostaten verbunden. Dies stellt eine besonders einfache und kostengünstige Möglichkeit dar, die sichere Funktion der erfindungsgemäßen elektrischen Schaltung zu gewährleisten.

Besonders vorteilhaft ist es, wenn als Potentiostat ein Operationsverstärker vorgesehen ist. In diesem Fall ist der nicht-invertierende Eingang des Operationsverstärkers mit der Meßelektrode gekoppelt.

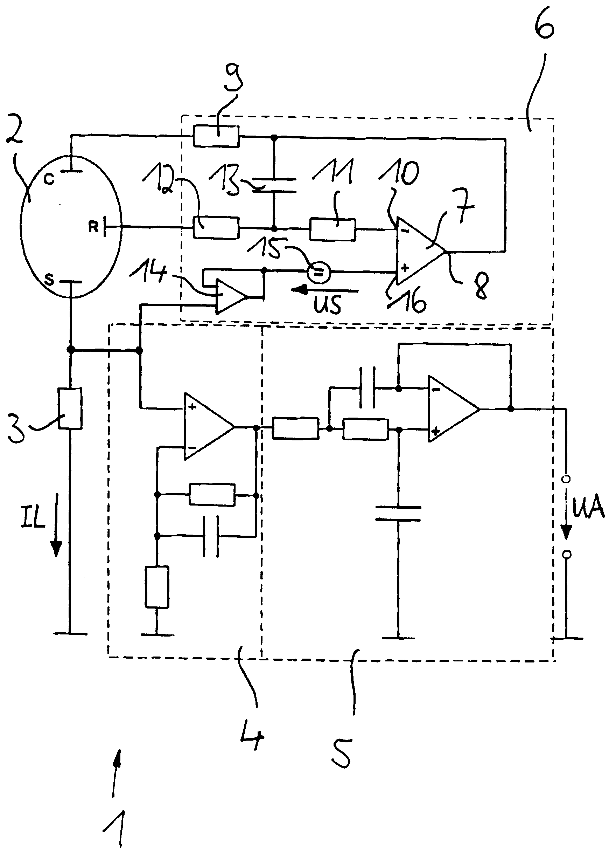

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Die einzige Figur der Zeichnung zeigt ein schematisches Blockschaltbild eines Ausführungsbeispiels einer erfindungsgemäßen elektrischen Schaltung 1 für einen elektrochemischen Sensor 2.

Bei dem Sensor 2 handelt es sich um einen amperometrischen Gassensor, der eine Meßelektrode S (auch Sensing-Elektrode genannt), eine Referenzelektrode R und eine Gegenelektrode C (auch Counter-Elektrode genannt) aufweist. Der Sensor 2 ist dazu geeignet, die Konzentration eines Gases beispielsweise in der Luft nachzuweisen. Dabei bewirkt das Gas in dem Sensor 2 eine elektrochemische Reaktion, die einen zu der Meßelektrode S fließenden Elektronenstrom zur Folge hat. Dieser Elektronenstrom ist etwa proportional zur Konzentration des zu messenden Gases.

Die Meßelektrode S des Sensors 2 ist über einen Lastwiderstand 3 nach Masse geschaltet. Der durch das zu messende Gas hervorgerufene Elektronenstrom fließt somit von der Meßelektrode S als Laststrom IL über den Lastwiderstand 3 nach Masse.

Zur Auswertung des Elektronenstroms ist die Schaltung 2 mit einem Verstärker 4 und einem Filter 5 versehen. Bei dem Verstärker 4 handelt es sich beispielsweise um einen Spannungsverstärker mit Spannungsausgang, der mittels eines entsprechend beschalteten Operationsverstärkers realisiert ist. Denkbar ist auch ein Stromverstärker. Bei dem Filter 5 handelt es sich beispielsweise um ein aktives Filter zweiter Ordnung, das mittels eines weiteren, entsprechend beschalteten Operationsverstärkers realisiert ist.

Gegebenenfalls ist es möglich, daß die Schaltung 1 nur mit einem Verstärker 4 versehen ist, also kein Filter 5 vorhanden ist.

Am Ausgang des Filters 5 bzw. gegebenenfalls am Ausgang des Verstärkers 4 ist eine Spannung UA vorhanden, die dem Elektronenstrom und damit der Konzentration des zu messenden Gases entspricht.

Die Schaltung 1 ist mit einem Potentiostaten 6 versehen, der zur Stabilisierung des Potentials der Meßelektrode gegenüber der Referenzelektrode R vorgesehen ist. Der Potentiostat 6 weist einen Operationsverstärker 7 auf, dessen Ausgang 8 über einen Schutzwiderstand 9 mit der Gegenelektrode C des Sensors 2 verbunden ist. Der invertierende Eingang 10 des Operationsverstärkers 7 ist über zwei Widerstände 11, 12 mit der Referenzelektrode R des Sensors 2 verbunden. Zwischen die beiden Widerstände 11, 12 ist eine Kapazität 13 angeschlossen, die mit dem Ausgang des Operationsverstärkers 7 verbunden ist. Die Widerstände 11, 12 und die Kapazität 13 stellen dabei im wesentlichen ein Filter dar.

Die Meßelektrode S des Sensors 2 ist über einen Verstärker 14 und eine Spannungsquelle 15 mit dem nicht-invertierenden Eingang 16 des Operationsverstärkers 7 verbunden. Mit dem Verstärker 14 wird die an der Meßelektrode S abgegriffene Spannung insbesondere von dem übrigen Teil des Potentiostaten 6 entkoppelt. Der Verstärker 14 ist beispielsweise als Spannungsfolger mit Der Verstärkung 1 mittels eines entsprechend beschalteten Operationsverstärkers realisiert. Die Spannungsquelle 15 dient dazu, eine Sollspannung US einzustellen. Beispielsweise kann es sich bei der Spannungsquelle 15 um einen Spannungsteiler handeln, dem eine Versorgungsgleichspannung parallelgeschaltet ist, und von dessen Mittelabgriff die Sollspannung US abgenommen wird.

Der Operationsverstärker 7 beaufschlagt die Gegenelektrode C derart, daß die Spannungsdifferenz zwischen seinem invertierenden und seinem nicht-invertierenden Eingang 10, 16 etwa Null ist. Läßt man die Widerstände 11, 12 und den Verstärker 14 außer Betracht, so ergibt sich daraus, daß die Sollspannung US gleich ist der Spannung zwischen der Referenzelektrode R und der Meßelektrode S. Dies ist gleichbedeutend damit, daß die Eingänge des Operationsverstärkers 7 unabhängig sind von dem über den Lastwiderstand 3 fließenden Laststrom IL.

Der Operationsverstärker 7 ist damit in der Lage, die Gegenelektrode C unabhängig von dem Laststrom IL zu beeinflussen. Damit wird erreicht, daß die Referenzelektrode R und damit letztlich auch die Meßelektrode S auf einer etwa konstanten Spannung bleiben, unabhängig davon, ob sich der Elektronenstrom in dem Sensor 2 und damit der Laststrom IL ändert. Der Sensor 2 kann dadurch von dem Potentiostaten 6 auf einen durch die Sollspannung US vorgegebenen Arbeitspunkt eingestellt werden, der auch bei sich ändernder Konzentration des zu messenden Gases und damit sich änderndem Elektronenstrom etwa konstant bleibt.

## Patentansprüche

1. Elektrische Schaltung (1) für einen elektrochemischen Sensor (2), insbesondere für einen amperometrischen Gassensor, der mit einer Meßelektrode (S), einer Referenzelektrode (R) und einer Gegenelektrode (C) versehen ist, wobei die Gegenelektrode (C) insbesondere zur Stabilisierung des Potentials der Meßelektrode (S) von einem Potentiostaten (6) beaufschlagt ist, **dadurch gekennzeichnet**, daß ein Eingang (16) des Potentiostaten (6) mit der Meßelektrode (S) gekoppelt ist.

2. Schaltung (1) nach Anspruch 1, dadurch gekennzeichnet, daß, die Meßelektrode (S) über einen Verstärker (14), insbesondere über einem Spannungsfolger, mit dem Eingang (16) des Potentiostaten (6) gekoppelt ist.

3. Schaltung (1) nach einem der Ansprüche 1 oder 2, dadurch gekennzeichnet, daß der mit der Meßelektrode (S) gekoppelte Eingang (16) des Potentiostaten (6) mit Mitteln (15) zum Einstellen einer Sollspannung (US), beispielsweise mit einem Spannungsteiler, gekoppelt ist.

4. Schaltung nach Anspruch 2 und Anspruch 3, dadurch gekennzeichnet, daß die Meßelektrode (S) über den Verstärker (14) und die Mittel (15) zum Einstellen einer Sollspannung (US) mit dem Potentiostaten (6) verbunden ist.

5. Schaltung (1) nach einem der vorstehenden Ansprüche, dadurch gekennzeichnet, daß die Referenzelektrode (R) mit einem weiteren Eingang (10) des Potentiostaten (6) gekoppelt ist.

6. Schaltung (1) nach einem der vorstehenden Ansprüche, dadurch gekennzeichnet, daß die Meßelektrode (S) mit einem Lastwiderstand (3) verbunden ist, der mit einer Auswerteschaltung, insbesondere einem Verstärker (4) und/oder einem Filter (5) gekoppelt ist.

7. Schaltung (1) nach einem der vorstehenden Ansprüche, dadurch gekennzeichnet, daß als Potentiostat (6) ein Operationsverstärker (7) vorgesehen ist.

8. Schaltung (1) nach Anspruch 7, dadurch gekennzeichnet, daß der nicht-invertierende Eingang (16) des Operationsverstärkers (7) mit der Meßelektrode (S) gekoppelt ist.
